# EUROPEAN PATENT SPECIFICATION

(11) **EP 0 845 394 B1**
(45) Date of publication and mention of the grant of the patent: **16.01.2002**
(21) Application number: 97203675.0
(22) Date of filing: 26.11.1997
(51) Int. Cl.: B60S 1/34

(54) **A windscreen wiper arm**
Scheibenwischerarm
Bras d'essuie-glace.

(30) Priority: 28.11.1996 NL 1004634
(43) Date of publication of application: 03.06.1998
(73) Proprietor: COOPER AUTOMOTIVE S.A., 6790 Aubange (BE)
(72) Inventor: Rosière, Alexandre Jean Victor Emilie, 6600 Bastogne (BE)
(74) Representative: Hooiveld, Arjen Jan Winfried

(56) References cited:
- EP-A- 0 575 242
- GB-A- 2 188 537
- US-A- 4 170 804
- US-A- 4 704 761

## Description

The present invention relates to a windscreen wiper arm, particularly for automobiles, comprising a mounting head mountable on a drive shaft and an arm member pivotally connected to the mounting head by means of a pivot pin wherein the arm member has a substantially U-shaped cross-section near said pivot pin comprising two side walls, and wherein a part of the mounting head extends between the side walls and beyond said pivot pin, said part being provided with opposite abutting surfaces for abutting against the side walls.

Such a windscreen wiper arm is known from European patent publication no. EP 0 575 242 A (Valeo). This known windscreen wiper arm includes a mounting head one part of which is fixed for rotation with a drive spindle and the opposite part of which supports an arm member which, in turn, carries a windscreen wiper blade by means of a rod. This arm member is articulated to the mounting head in order to be able to follow the variations of curvature of the windscreen and to enable it to be raised, for example during cleaning of the windscreen.

The windscreen wiper arm as known in the above-mentioned European patent document has various disadvantages. In particular, the articulation of the arm member to the mounting head appears to be rather weak, particularly when a force in the wiping plane is applied at the arm member end. In view of the relatively large arm member length the mechanical couple in the comparatively small area of the articulation mentioned above is very large, even when small forces are applied at the end of the arm member. This often results in breaking of the connection between the arm member and the mounting head. It is already known to improve the mechanical resistance of the articulation area by designing relevant parts of the mounting head and the arm member larger and/or thicker than usual in that area; however, with limited effects.

The object of the present invention is that of providing a windscreen wiper arm of improved type which is provided with a reinforced articulation as mentioned above, i.e. that is able to withstand heavy loads applied at the end of the arm member.

Thereto, according to the present invention a windscreen wiper arm mentioned in the preamble is characterized in that said part at its free end is provided with at least one tooth hooking behind an internal vertical rib of the arm member, wherein said rib extends in transverse direction of the arm member. This tooth coming in contact behind the vertical rib inside the passage of the "U" shaped arm member, acts as a stop point in case of deformation of the arm member due to a load applied at the end of the arm member in the longitudinal direction thereof. If a force is applied at the end of the arm member, counter forces are not exerted only in the articulation area, but particularly on the side walls of the arm member due to the abutting relationship between the abutting surfaces of said part and the side walls. As the abutting surfaces of said part may each rest against a side of the arm member, a larger surface contact between the mounting head and the arm member is achieved, thus providing a much better resistance to wear. Additionally, the claimed construction has the advantage that any angular play between the mounting head and the arm member in wiping plane is avoided.

British patent document no. GB 2,188,537 A (Fister) discloses a windscreen wiper arm comprising a mounting head mountable on a drive shaft and an arm member pivotably connected thereto, wherein the arm member is made of plastics material. The mounting head may also be made of the same material, and may be covered by a plastics cap. The arm member may be connected to the mounting head by means of pin, which engages in slot, and by spring. A rod, to which a wiper blade may be connected, may be supported within the arm member. The use of plastics instead of metal for making the arm member and mounting head is stated to be more cost-effective.

In a preferred embodiment of a windscreen wiper arm according to the invention the free end of said part is located at a distance from said pivot pin of more than 8 mm, preferably more than 20 mm. Preferably said part is formed by at least one elongated protrusion, particularly two protrusions. The mechanical couple in the comparatively small articulation area mentioned earlier is considerably reduced by making use of a larger part of the mounting head than usual entering the passage in the U-shaped arm member.

In another preferred embodiment of a windscreen wiper arm according to the invention both the mounting head and the arm member are made of a plastic material. The use of plastics instead of metal for making the arm member and the mounting head is not only more cost effective as such, but enables to design the articulation area particularly less large and/or thick than usual, as according to the invention the forces applied in that area are substantially reduced.

The invention furthermore relates to a mounting head and/or arm member as defined in a windscreen wiper arm according to the invention. Furthermore, the present invention relates to a windscreen wiper comprising a windscreen wiper arm according to the invention, and finally it refers to an automobile equipped with a windscreen wiper arm according to the invention.

Further objects and effects of the invention will become apparent from the following detailed description of a preferred embodiment of the invention taken in conjunction with the drawings, in which
- figures 1 and 2 illustrate schematically a longitudinal section of a mounting head and an arm member according to the invention before and after being pivotally connected together, respectively;
- figure 3 shows a bottom view of the mounting head and the arm member connected together in accordance with figure 2;

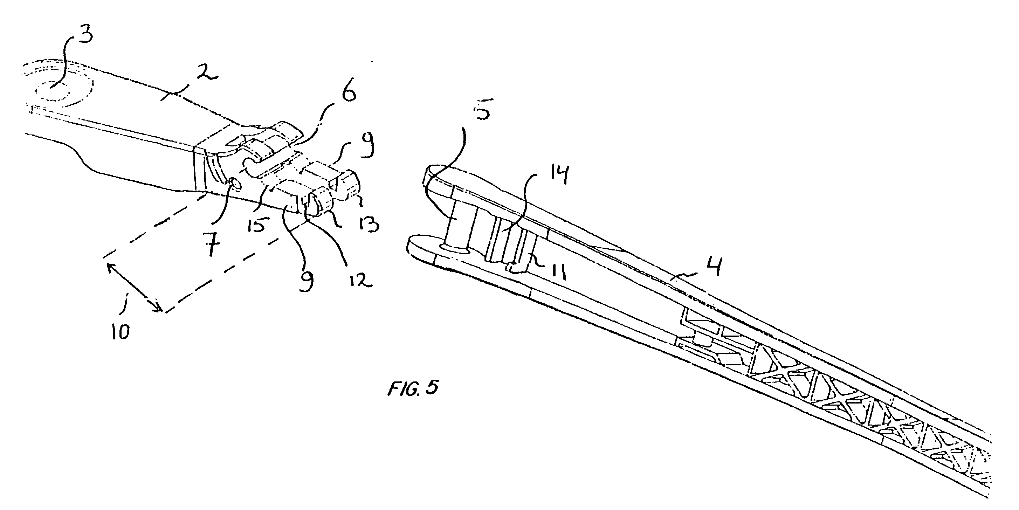

- figure 4 is a cross section along the lines A-A and B-B of figure 2, respectively; and
- figure 5 illustrates a perspective view of the mounting head and the arm member of figure 1.

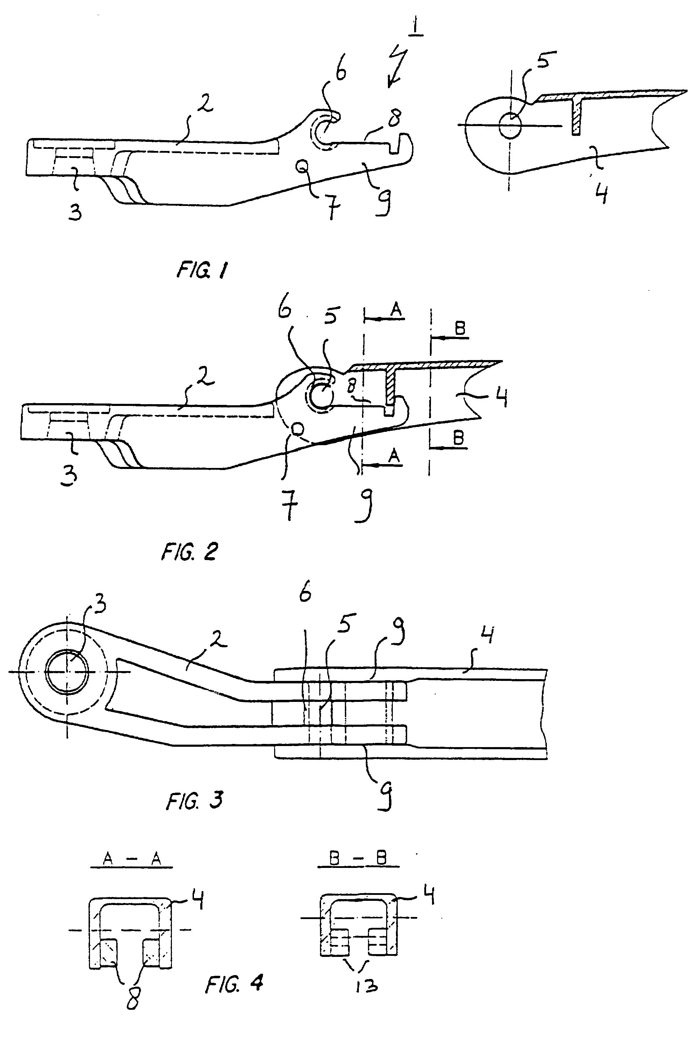

As illustrated in figure 1, a windscreen wiper arm generally indicated 1, comprises a mounting head 2 of plastics material which can be fixed for rotation to a shaft 3 driven, via a mechanism not illustrated, by a small motor. The mounting head 2 further supports a plastics material arm member 4, by way of an articulated attachment, which arm member 4 in turn supports, in a known way, a windscreen wiper blade, not illustrated for simplicity, by means of a metal rod. For esthetical reasons the windscreen wiper arm 1 preferably includes a cap of plastics material (not shown) which covers the mounting head 2. As illustrated in figure 2, the articulated attachment between the mounting head 2 and the arm member 4 is achieved by the housing of a transverse pin 5 of the arm member 4 in a notch 6 of the mounting head 2, having substantially the same diameter, and in the connection between the two by means of a spring (not shown). This spring is hooked with its first end on a pin 7 on the mounting head 2 and with its second end on to a part of the arm member 4. To disengage the arm member 4 from the mounting head 2 the former has to be rotated in a counter-clockwise sense about the axis of the pin 5 in such a way as to extract the pin 5 from the notch 6. It goes without saying that before extraction it is necessary te release the spring either from the mounting head 2 or from the arm member 4. In use, the shaft 3 rotates alternately in a clockwise and in a counter-clockwise sense carrying the mounting head 2 into rotation also, which in turn draws the arm member 4 into rotation and by means of a rod moves the wiper blade (not shown).

As illustrated in the figures, the mounting head 2 is provided with an elongated part comprising two protrusions 8 having abutting surfaces 9 for abutting against the side walls of the "channel"-like arm member 4. Because of this abutting relationship the mechanical couple on the articulation (connecting) area is reduced, allowing to design this area less robust. The free ends of the protrusions 8 are preferably located at a distance 10 from the pivot axis of more than 20 mm. Particularly, the distance 10 is more than at least half the width of the mounting head 2. The arm member has an internal vertical rib 11 fitting into a corresponding groove 12 in the mounting head 2. The free ends of the protrusions 8 are provided with upwardly extending teeth 13 hooking behind this vertical rib 11, acting as a stop point in case a load is supplied at the end of the arm member 4 in the longitudinal direction thereof. To increase the rigidity of the arm member 4 there is a further rib 14 fitting into a corresponding groove 15 in the protrusions 8.

The present invention is not restricted to the preferred embodiment of the figures, but also covers other embodiments.

## Claims

1. A windscreen wiper arm (1), particularly for automobiles, comprising a mounting head (2) mountable on a drive shaft (3) and an arm member (4) pivotally connected to the mounting head (2) by means of a pivot pin (5), wherein the arm member (4) has a substantially U-shaped cross-section near said pivot pin (5) comprising two side walls, and wherein a part of the mounting head (2) extends between the side walls and beyond said pivot pin (5), said part being provided with opposite abutting surfaces (9) for abutting against the side walls, **characterized in that** said part at its free end is provided with at least one tooth (13) hooking behind an internal vertical rib (11) of the arm member (4), wherein said rib (11) extends in transverse direction of the arm member (4).

2. A windscreen wiper arm according to claim 1, wherein the free end of said part is located at a distance from said pivot pin (5) of more than 8 mm, preferably more than 20 mm.

3. A windscreen wiper arm according to claim 1 or 2, wherein said part is formed by at least one protrusion (8), preferably two protrusions (8).

4. A windscreen wiper arm according to claim 1, 2 or 3, wherein both the mounting head (2) and the arm member (4) are made of a plastic material.

5. A mounting head (2) and/or an arm member (4) as defined in a windscreen wiper arm according to any one of the preceding claims 1 through 4.

6. A windscreen wiper comprising a windscreen wiper arm (1) according to any one of the preceding claims 1 through 4.

7. An automobile equipped with a windscreen wiper arm (1) according to any one of the preceding claims 1 through 4.

## Patentansprüche

1. Scheibenwischerarm (1), insbesondere für Kraftfahrzeuge, der einen Anbringungskopf (2), der an einer Antriebswelle (3) angebracht werden kann, und ein Armelement (4) umfasst, das durch einen Schwenkbolzen (5) schwenkbar mit dem Anbringungskopf (2) verbunden ist, wobei das Armelement (4) in der Nähe des Schwenkbolzens (5) einen im Wesentlichen U-förmigen Querschnitt hat, der zwei Seitenwände umfasst, und wobei ein Teil des Anbringungskopfes (2) sich zwischen den Seitenwänden und über den Schwenkbolzen (5) hinaus erstreckt und der Teil mit einander gegenüberliegenden Anliegeflächen (9) versehen ist, die an den Seitenwänden anliegen, **dadurch gekennzeichnet, dass** der Teil an seinem freien Ende mit wenigstens einem Zahn (13) versehen ist, der hinter einem inneren vertikalen Steg (11) des Armelementes (4) einhakt, wobei sich der Steg (11) in der Querrichtung des Armelementes (4) erstreckt.

2. Scheibenwischerarm nach Anspruch 1, wobei das freie Ende des Teils in einem Abstand zu dem Schwenkbolzen (5) von mehr als 8 mm, vorzugsweise mehr als 20 mm, angeordnet ist.

3. Scheibenwischerarm nach Anspruch 1 oder 2, wobei der Teil durch wenigstens einen Vorsprung (8), vorzugsweise zwei Vorsprünge (8), gebildet wird.

4. Scheibenwischerarm nach Anspruch 1, 2 oder 3, wobei sowohl der Anbringungskopf (2) als auch das Armelement (4) aus einem Kunststoffmaterial bestehen.

5. Anbringungskopf (2) und/oder Armelement (4), ausgebildet bei einem Scheibenwischer nach einem der vorangehenden Ansprüche 1 bis 4.

6. Scheibenwischer, der einen Scheibenwischerarm (1) nach einem der vorangehenden Ansprüche 1 bis 4 umfasst.

7. Kraftfahrzeug, das mit einem Scheibenwischerarm (1) nach einem der vorangehenden Ansprüche 1 bis 4 versehen ist.

## Revendications

1. Bras d'essuie-glace (1), particulièrement destiné aux automobiles, comprenant une tête de fixation (2) pouvant se monter sur un arbre d'entraînement (3) et un élément formant bras (4) relié de manière pivotante à la tête de fixation (2) au moyen d'un pivot (5), dans lequel l'élément formant bras (4) a une section transversale sensiblement en forme de U à proximité dudit pivot (5) comprenant deux parois latérales, et dans lequel une partie de la tête de fixation (2) s'étend entre les parois latérales et au delà dudit pivot (5), ladite partie étant munie de surfaces d'aboutement opposées (9) destinées à buter contre les parois latérales, **caractérisé en ce qu'**au niveau de l'extrémité libre de ladite partie, au moins une dent (13) s'accroche derrière une nervure verticale intérieure (11) de l'élément formant bras (4), dans lequel ladite nervure (11) s'étend dans la direction transversale de l'élément formant bras (4).

2. Bras d'essuie-glace selon la revendication 1, dans lequel l'extrémité libre de ladite partie est située à une distance dudit pivot (5) supérieure à 8 mm, de préférence supérieure à 20 mm.

3. Bras d'essuie-glace selon la revendication 1 ou 2, dans lequel ladite partie est constituée d'au moins une saillie (8), de préférence de deux saillies (8).

4. Bras d'essuie-glace selon la revendication 1, 2 ou 3, dans lequel la tête de fixation (2) et l'élément formant bras (4) sont tous deux en plastique.

5. Tête de fixation (2) et/ou élément formant bras (4) tel que défini dans un bras d'essuie-glace selon l'une quelconque des revendications précédentes 1 à 4.

6. Essuie-glace comprenant un bras d'essuie-glace (1) selon l'une quelconque des revendications précédentes 1 à 4.

7. Automobile équipée d'un bras d'essuie-glace (1) selon l'une quelconque des revendications 1 à 4.
